# EUROPÄISCHE PATENTSCHRIFT

(11) **EP 0 875 135 B1**
(45) Veröffentlichungstag und Bekanntmachung des Hinweises auf die Patenterteilung: **14.08.2002**
(21) Anmeldenummer: 98106051.0
(22) Anmeldetag: 02.04.1998
(51) Int. Cl.: A01D 87/10, B65G 53/52, F04D 29/28, F04D 23/00

(54) **Gebläse zum Fördern stark schleissender Blasgüter**
Fan for conveying very eroding material
Ventilateur pour transporter des matériaux à forte usure

(30) Priorität: 05.04.1997 DE 29706042 U
(43) Veröffentlichungstag der Anmeldung: 04.11.1998
(73) Patentinhaber: Schneider, Gabriele, 79697 Wies (DE)
(72) Erfinder: Schneider, Gabriele, 79697 Wies (DE)
(74) Vertreter: Patent- und Rechtsanwaltssozietät, Maucher, Börjes & Kollegen

(56) Entgegenhaltungen:
- DE-A- 4 340 237
- FR-A- 2 062 173
- FR-A- 2 476 434
- US-A- 1 753 936
- US-A- 1 806 494

## Beschreibung

Die Erfindung betrifft ein Gebläse zum Fördern stark schleißender Blasgüter, insbesondere zum pneumatischen Ausbringen von Halm- oder Schüttgütern, mit zumindest einem Flügel-Förderrad, das in einem Gebläsegehäuse rotiert, wobei das Flügel-Förderrad an den vorlaufenden Wänden seiner Flügel und/oder das Gebläsegehäuse wenigstens in einem vom Blasgut beaufschlagten Teilbereich seiner Gehäuseinnenwand Halteprofilierungen oder Haltevertiefungen zur Bildung eines Blasgut-Materialpolsters aufweisen.

Aus der US-A-1 806 494 ist bereits ein Gebläse der eingangs erwähnten Art bekannt, das an den vorlaufenden Flügelwänden seines Flügel-Förderrades Halteprofilierungen oder Haltevertiefungen zur Bildung eines Blasgut-Materialpolsters aufweist. Solche Halteprofilierungen oder Haltevertiefungen sind bei dem vorbekannten Gebläse desweiteren auch an der Gehäuseinnenwand vorgesehen. Dabei soll das in den Halteprofilierungen oder Haltevertiefungen gebildete Blasgut-Materialpolster beim Fördern abrasiver Medien einem unerwünscht erhöhten Verschleiß des Gebläses in diesem Bereich entgegenwirken.

Bei dem aus der US-A-1 806 494 vorbekannten Gebläse stehen die Förderrad-Flügel beidseits der Rotationsebene in den Gehäuse-Innenraum vor, so daß auf der dem Materialeinlaß abgewandten offenen Seite des Flügel-Förderrades zumindest eine Teilmenge des erzeugten Luftstromes passieren kann und für eine zielgerichtete Förderbewegung verloren geht.

Aus der DE 33 22 969 A1 ist bereits ein fahrbares Waldkalkgerät bekannt, das ein Gebläse zum Kalken großer Waldbestände aufweist. Das vorbekannte Gebläse weist ein Flügel-Förderrad auf, das in einem Gebläsegehäuse rotiert. Die Flügel des Flügel-Förderrades sind nach hinten gebogen, so daß auch ein feuchter Kalk gleichmäßig ausgetragen und auf der Fläche verteilt werden kann. Dabei ist der Auswurfkanal des vorbekannten Gebläses schwenkbar ausgebildet und kann vom Fahrerhaus aus oder auch automatisch verschwenkt werden, um eine gleichmäßige Beschichtung des Bodens auch bei langsamen Verfahren des Fahrzeuges sicherzustellen.

Bei derartigen Gebläsen, die beispielsweise in der Landwirtschaft zum pneumatischen Fördern von Halm- und Schüttgütern eingesetzt werden, besteht ein Problem darin, daß diese Blasgüter eine hohe abrasive Wirkung haben, so daß das Gebläse sowie das darin rotierende Flügel-Förderrad einem hohen Verschleiß ausgesetzt sind. Dies gilt insbesondere auch dann, wenn ein schwenkbarer Auswurfkanal vorgesehen ist, der dem Blasgut-Strom steuernd zumindest bereichsweise in den Weg gestellt wird. Ein zielgerichtetes Ausblasen des Blasgut-Stromes ist jedoch erforderlich, um ein gleichmäßiges Ausbringen des Blasgutes auch über weite Distanzen zu erreichen.

Es besteht daher insbesondere die Aufgabe, ein Gebläse der eingangs erwähnten Art zu schaffen, das sich auch bei hoher Leistungsfähigkeit dennoch durch einen möglichst geringen Verschleiß auszeichnet.

Eine erfindungsgemäße Lösung dieser Aufgabe besteht darin, daß auf der einem Luft- und Materialeinlaß des Gebläses abgewandten Seite des Flügelförderrades eine Rück- oder Seitenwand vorgesehen ist, und daß auf der den Flügeln abgewandten Seite der Rück- oder Seitenwand zumindest ein Lüfterlaufrad vorgesehen ist, dem am Gebläsegehäuse ein eigener Lufteinlaß zugeordnet ist.

Das Flügel-Förderrad weist auf seiner dem Luft- und Materialeinlaß des erfindungsgemäßen Gebläses abgewandten Seite eine Rück- oder Seitenwand auf. Diese Förderrad-Rück- oder -Seitenwand begünstigt die Erzeugung eines voluminösen Förderstroms, so daß auch schweres Blasgut ausgeblasen werden kann. Um jedoch auszuschließen, daß eine Teilmenge des abrasiven Blasguts kurzschlussbedingt auf die den Flügeln abgewandte Seite der Förderrad-Rück- oder -Seitenwand gelangen und dort schleißend wirken kann, ist zumindest ein Lüfterlaufrad vorgesehen, daß zur Erzeugung eines zusätzlichen Luftstromes dient. Da das zumindest eine Lüfterlaufrad auf der den Flügeln abgewandten Seite des Flügel-Förderrades angeordnet und ihm ein eigener Lufteinlaß zugeordnet ist, hält der vom Lüfterlaufrad erzeugte zusätzliche Luftstrom das abrasive Blasgut von der den Flügeln abgewandten Seite der Förderrad-Rück- oder -Seitenwand fern. Der vom Lüfterlaufrad erzeugte Luftstrom vereinigt sich im Gebläsegehäuse mit dem das Blasgut tragenden Gebläsestrom zu einem kraftvollen Förderstrom, der auch schweres Blasgut weit austragen kann.

Auch das erfindungsgemäße Gebläse weist im Bereich seiner vom Blasgut beaufschlagten Teile, nämlich an den vorlaufenden Wänden oder Flügel und/oder an der Gehäuseinnenwand Halteprofilierungen oder Haltevertiefungen auf, die sich während des Betriebs des erfindungsgemäßen Gebläses mit dem Blasgut derart zusetzen, daß diese Gebläseteile mit einem schützenden Materialpolster überdeckt sind. Nach Bildung dieses Materialpolsters kommen die betreffenden Teile mit dem in das Gebläse nachströmenden Blasgut nicht mehr unmittelbar in Kontakt und sind somit gegen die schleißende Wirkung dieses abrasiven Materials gut geschützt. Je nach den Abmessungen und der Dichte des geförderten Blasguts können Haltevertiefungen erforderlich oder auch Halteprofilierungen mit einem beispielsweise sägezahnartigen Profilquerschnitt ausreichend sein. Mittels der erfindungsgemäß vorgesehenen Halteprofilerungen oder Haltevertiefungen wird auch bei einem leistungsstarken Gebläse ein übermäßiger Verschleiß durch das im Gebläse transportierte Blasgut vermieden.

Dabei ist es zweckmäßig, wenn die Höhe und/oder die lichten Abmessungen der Halteprofilierungen oder Haltevertiefungen an die Materialbeschaffenheit des Blasgut angepaßt sind.

Um die benötigten Haltevertiefungen beispielsweise an den Flügeln des Flügel-Förderrades zu bilden, können an den vorlaufenden Flügelwänden und/oder an der Gehäuseinnenwand etwa parallel zur Rotationsachse des Flügelrades orientierte Stege oder Rippen vorgesehen sein, die zwischen sich die Haltevertiefungen begrenzen. Dabei ist es vorteilhaft, wenn die Haltevertiefungen auch an ihren quer zur Steg-Längsrichtung orientierten Stirnenden eine Begrenzung aufweisen, die durch entsprechende Querstege oder durch die Rückwand des Flügel-Förderrades gebildet sein können.

Eine sich auch auf die Leistungsfähigkeit des erfindungsgemäßen Gebläses nachteilig auswirkende Unwucht des Flügel-Förderrades wird vermieden, wenn die etwa in gleichen Abständen von der Rotationsachse angeordneten Haltevertiefungen der einzelnen Flügel etwa das gleiche Aufnahmevolumen haben. Dabei müssen nicht alle an einem Flügel vorgesehenen Haltevertiefungen das gleiche Aufnahmevolumen aufweisen, vielmehr kann es ausreichend sein, wenn die etwa in gleichen Abständen von der Rotationachse an den einzelnen Flügeln vorgesehenen Haltevertiefungen in ihrem Aufnahmevolumen übereinstimmen.

Üblicherweise sollten die Stege oder Rippen etwa in einem Abstand von 10 bis 100 mm angeordnet sein und eine Höhe von 10 bis 40 mm haben.

Da das Blasgut im Bereich des Auslaßkanales in einem zunehmend schrägen Winkel auf die Gehäuse-Innenwand auftrifft, ist es vorteilhaft, wenn die Haltevertiefungen im Bereich des Auslaßkanals des Gebläses gegenüber den am Innenumfang des Gebläsegehäuses angeordneten Haltevertiefungen kleinere lichte Abmessungen haben und wenn gegebenenfalls die im Bereich des Auslaßkanals vorgesehenen Stege oder Rippen dazu in vergleichsweise kleineren Abständen voneinander angeordnet sind.

Dabei sieht eine besonders leistungsfähige und kompakte Ausführungsform gemäß der Erfindung vor, daß das Flügel-Förderrad und das zumindest eine Lüfterlaufrad eine gemeinsame Welle aufweisen und daß der dem Flügel-Förderrad zugeordnete Luft-und Materialeinlaß einerseits und der Lufteinlaß des zumindest einen Lüfterlaufrades andererseits auf gegenüberliegenden Stirnseiten des Gebläsegehäuses angeordnet sind.

Einem unerwünschten Überströmen der Förderrad-Rückwand durch den Blasgut-Strom kann wirksam entgegengewirkt und gleichzeitig kann die Förderleistung des erfindungsgemäßen Gebläses wesentlich erhöht werden, wenn zumindest ein Lüfterlaufrad vorgesehen ist, daß als Drucklüfterlaufrad ausgebildet ist.

Vorteilhaft ist es, wenn das Flügel-Förderrad und das benachbarte Lüfterlaufrad eine gemeinsame Rück- oder Seitenwand haben. Bei dieser bevorzugten Ausführungsform bildet die Förderrad-Rückwand gleichzeitig die Seitenwand des benachbarten Lüfterlaufrades.

Um auch ein besonders dichtes und entsprechend schweres Blasgut über weite Distanzen aufbringen zu können, ist es vorteilhaft, wenn zwischen dem äußeren Lüfterlaufrad und dem Flügel-Förderrad ein Drucklüfterlaufrad vorgesehen ist. Dabei wird auch auf der den Flügeln abgewandten Seite des Drucklüfterlaufrades ein Überströmen des Blasgut-Stromes wirksam verhindert, wenn dort ein weiteres Lüfterlaufrad vorgesehen ist, dessen Flügel den Flügeln des Flügel-Förderrades im wesentlichen entsprechen. Eine Weiterbildung gemäß der Erfindung sieht daher vor, daß die Flügel eines äußeren Lüfterlaufrades den Flügeln des Flügel-Förderrades im wesentlichen entsprechen und daß zwischen dem äußeren Lüfterlaufrad und dem Flügel-Förderrad vorzugsweise ein Drucklüfterlaufrad vorgesehen ist.

Da der Durchmesser eines Gebläse-Laufrades regelmäßig an das zu fördernde Blasgut anzupassen ist und da der Druckmesser des Drucklüfterlaufrades daher stets kleiner als der Durchmesser des die Halm- und Schüttgüter fördernden Flügel-Förderrades sein sollte, ist es zweckmäßig, wenn die Flügel des Flügel-Förderrades und gegebenenfalls des äußeren Lüfterlaufrades über den Außenumfang der Rück- oder Seitenwände, insbesondere des Drucklüfterlaufrades vorstehen. Dabei wird insbesondere durch das Durcklüfterlaufrad ein starker Luftstrom erzeugt, der die freien Flügelenden des Flügel-Förderrades überströmt. Das dort über das Materialpolster strömende Blasgut wird von dem vom Drucklüfterlaufrad kommenden Luftstrom angehoben und derart beschleunigt, daß auch schwere Blasgutteilchen und große Blasgutmengen vom Gebläse weit ausgetragen werden.

Um ein gleichmäßiges Ausbringen des Blasgutes auch auf großen Flächen zu begünstigen, ist es vorteilhaft, wenn der Luft- und Materialauslaß des Gebläsegehäuses einen rechteckigen Öffnungsquerschnitt hat. Während ein im Querschnitt runder Material-Auslaß die Strömungsgeschwindigkeiten in dem vom Gebläse erzeugten Luftstrom vereinheitlicht, kann der in sich inhomogene Luftstrom durch einen im Querschnitt rechteckigen Material-Auslaß ungehindert durchströmen, was einem gleichmäßiges Ausbringen des Blasgutes wesentlich entgegenkommt.

An sich kann der vom Gebläse erzeugte und mit dem Blasgut angereicherte Luftstrom über einen verschwenkbaren Auslaßkanal gesteuert werden. Um jedoch auch in diesem Bereich des Gebläses einem Verschleiß wirksam entgegenzuwirken und um dem Luftstrom keine Gebläseteile störend in den Weg zu stellen, besteht ein weiterer Lösungsvorschlag erfindungsgemäß darin, daß das Gebläsegehäuse relativ zu einem Gebläseträger um eine etwa horizontal orientierte Drehachse verdrehbar ist und daß der Luft- und Material-Auslaß des Gebläses in Gebrauchsstellung vorzugsweise quer zur Fahrtrichtung einer dem Gebläse zugeordneten Zugmaschine oder dergleichen Fahrzeuges ausgerichtet ist.

Um beispielsweise in Hanglagen zu verhindern, daß das auszubringende Material lediglich in einem kleinen Arbeitsbereich an den Hang geschleudert wird, läßt sich bei dieser Ausführungsform gemäß der Erfindung die vertikale Auswurfrichtung des Radialgebläses an die Hangneigung anpassen. Da dazu das gesamte Gebläsegehäuse mit dem Luftstrom-Auslaß relativ zu einem Gebläseträger um eine horizontal orientierte Drehachse verstellbar ist und nicht bloß der Luftstrom-Auslaß über Umlenkungen separat verstellt wird, ist diese Anpassung an die Geländeformation mit keinen Änderungen der spezifischen Daten des erfindungsgemäßen Gebläses verbunden. Das erfindungsgemäße Gebläse zeichnet sich insbesondere in dieser Ausführungsform durch eine unverändert hohe Leistungsfähigkeit in jeder Stellposition des Gebläsegehäuses aus. Trotz seiner auch in schwierigen Geländeformationen hohen Arbeitsleistung kann das erfindungsgemäße Gebläse vergleichsweise kostengünstig betrieben werden.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: das Flügel-Förderrad eines Radialgebläses in einer perspektivischen Darstellung,
- Fig. 2: das Gebläsegehäuse des Radialgebläses aus Fig. 1,
- Fig. 3: ein Flügel-Förderrad, auf dessen den Flügeln abgewandten Seite der Förderrad-Rückwand ein Lüfterlaufrad vorgesehen ist,
- Fig. 4: ein Flügel-Förderrad mit Lüfterlaufrad, ähnlich dem aus Fig. 3, wobei das Lüfterlaufrad als leistungsstarkes Drucklüfterlaufrad ausgebildet ist,
- Fig. 5: das Flügel-Förderrad mit Drucklüfterlaufrad aus Fig. 4 aus der gegenüberliegenden Perspektive,
- Fig. 6: ein Flügel-Förderrad, dem auf seiner den Flügeln abgewandten Seite der Förderrad-Rückwand ein Lüfterlaufrad zugeordnet ist, wobei zwischen Flügel-Förderrad und Lüfterlaufrad zusätzlich ein Drucklüfterlaufrad vorgesehen ist,
- Fig.7: eine fahrbare und in Seitenansicht dargestellte Vorrichtung zum Ausbringen stark schleißender Blasgüter mit einem Gebläse, ähnlich dem aus Fig. 4 und 5, und
- Fig. 8: die Vorrichtung aus Fig. 7 in einer Rückansicht.

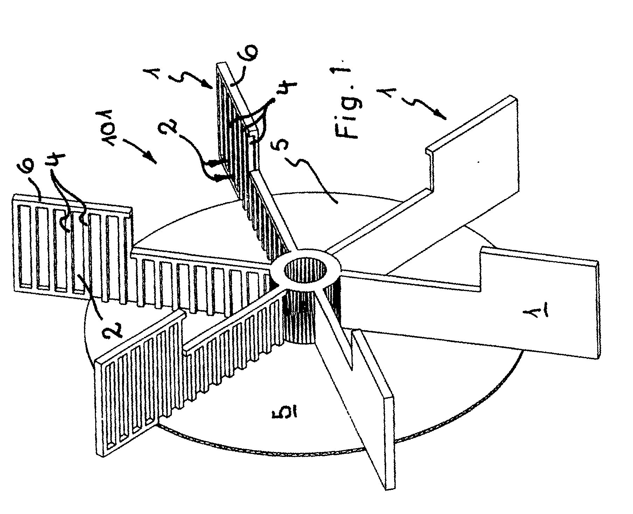

In den Fig. 1 und 3 bis 7 sind verschiedene Flügel-Förderräder 101, 103, 104 und 106 dargestellt, die jeweils in einem ansonsten nicht weiter dargestellten Radial-Gebläse zum Einsatz kommen, das zum Fördern stark schleißender Blasgüter, insbesondere zum Ausbringen von Kalk oder anderen Halm- oder Schüttgütern, vorgesehen ist. Herkömmliche Gebläse sind insbesondere in den von Blasgut beaufschlagten Bereichen einem hohen Verschleiß ausgesetzt.

Wie aus einem Vergleich der Fig. 1 und 3 bis 7 deutlich wird, weisen die Flügel-Förderräder 101, 103, 104 und 106 an den vorlaufenden Wänden ihrer Flügel 1 Haltevertiefungen 2 zur Bildung eines Materialpolsters auf. In diesen Haltevertiefungen 2 kann sich jeweils eine Teilmenge des Blasgutes verfangen und ein definiertes Materialpolster bilden, welches das Flügel-Förderrad 101, 103, 104 oder 106 gegen die abrasive Wirkung des nachfolgenden Blasgutes schützt.

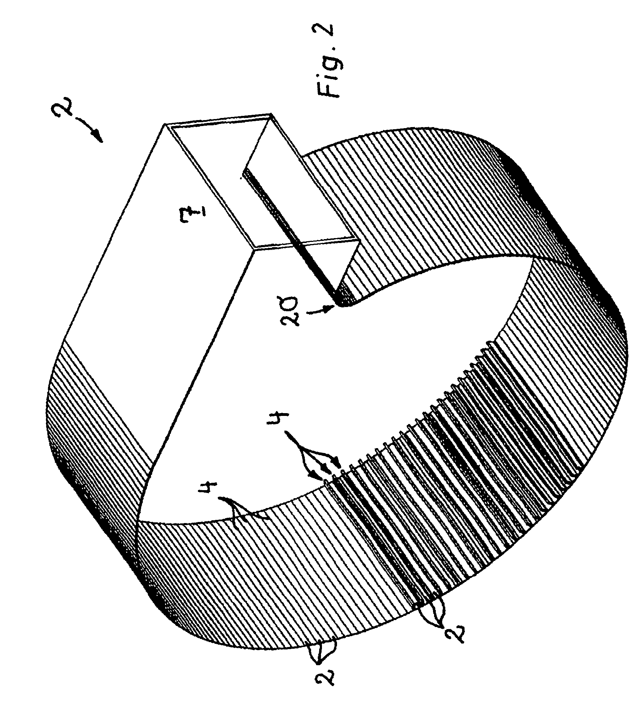

In Fig. 2 ist das Gebläsegehäuse 3 eines Radial-Gebläses dargesellt. Wie in Fig. 2 angedeutet ist, weist auch das Gebläse-Gehäuse 3 in dem vom Blasgut beaufschlagten Teilbereich seiner Gehäuseinnenwand entsprechende Haltevertiefungen 2 auf.

Die an der Gehäuseinnenwand und/oder an den vorlaufenden Flügelwänden vorgesehenen Haltevertiefungen 2 sind durch Stege oder Rippen 4 begrenzt, die etwa parallel zur Rotationsachse des Flügel-Förderrades 101, 103, 104, 106 verlaufen. Dabei sind die am Flügel-Förderrad 101, 103, 104, 106 vorgesehenen Haltevertiefungen auch an ihren quer zur Rotationsachse orientierten Stirnseiten geschlossen ausgebildet. Während die Haltevertiefungen 2 dazu auf der einen Stirnseite im wesentlichen durch die Förderrad-Rückwand 5 begrenzt sind, sind auf der gegenüberliegenden, dem Luft- und Materialeinlaß des Gebläses zugewandten Stirnseite randseitige Querstege oder - rippen 6 vorgesehen.

Die an den Flügeln sowie an der Gehäuseinnenwand vorgesehenen Stege oder Rippen 4, 6 sind etwa in einem Abstand von 10 bis 100 mm angeordnet und weisen eine Höhe von 10 bis 40 mm auf. Dabei haben die an der Gehäuseinnenwand vorgesehenen Haltevertiefungen 2 im Bereich 20 eines Auslaßkanals 7 gegenüber den am Innenumfang des Gebläsegehäuses angeordneten Haltevertiefungen 2 vorzugweise kleinere lichte Abmessungen. Während die im Bereich des Auslaßkanals 7 vorgesehenen Haltevertiefungen 2 in Fig. 2 nicht weiter dargestellt sind, sind die am Gehäuseinnenumfang vorgesehenen Haltevertiefungen 2 mit den dazugehörigen Stegen oder Rippen 4 zum Teil nur schematisch angedeutet.

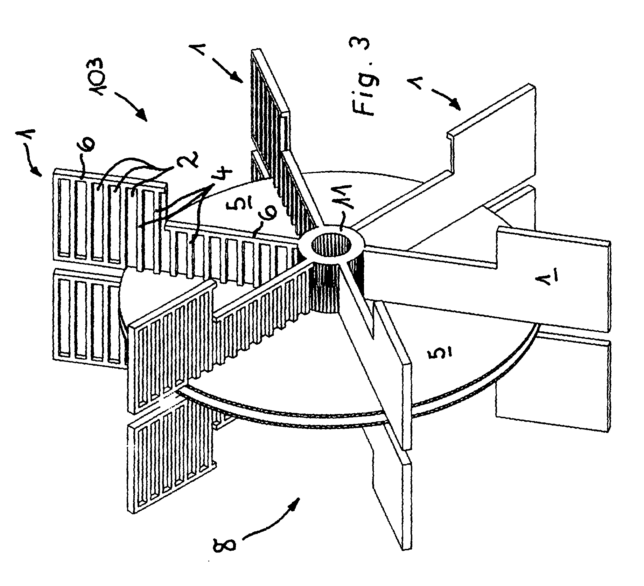

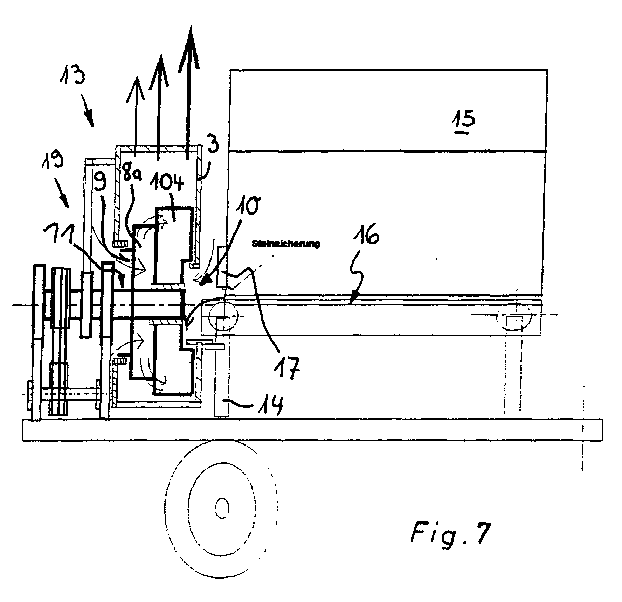

Da der vom Flügel-Förderrad angesaugte und mit dem abrasiven Blasgut angereicherte Luftstrom teilweise auch hinter die Förderrad-Rückwand 5 gelangen und dort schleißend wirken kann, ist bei den in Fig. 3 bis 7 dargestellten Ausführungen auf der den Flügeln 1 abgewandten Seite des Flügel-Förderrades 101, 103, 104 und 106 zumindest ein Lüfterlaufrad 8, 8a vorgesehen, dem ein eigener zentraler Lufteinlaß am Gebläsegehäuse 3 zugeordnet ist. In Fig. 7 ist dargestellt, daß der Lufteinlaß 9 des zumindest einen Lüfterlaufrades 8a und der Luft- und Materialeinlaß 10 des Flügel-Förderrades 104 auf gegenüberliegenden Seiten des Gebläsegehäuses angeordnet sind. Wie die Fig. 3 bis 7 darüber hinaus zeigen, weisen das Flügel-Förderrad 103, 104 oder 106 und das zumindest eine Lüfterlaufrad 8, 8a eine gemeinsame Welle 11 auf.

Bei leichterem Blasgut kann es ausreichend sein, wenn die Flügel des Lüfterlaufrades 8 im wesentlichen den Flügeln 1 des Flügel-Förderrades 103 entsprechen, wie dies beispielsweise in Fig. 3 gezeigt ist. Dabei sind auch an den Flügeln des Lüfterlaufrades 8 Haltevertiefungen 2 vorgesehen.

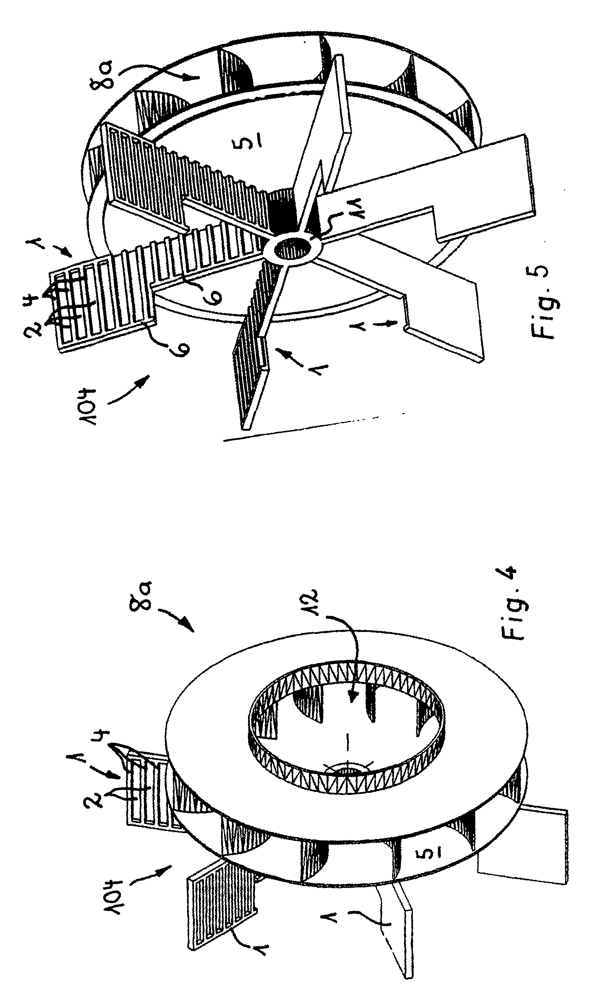

Bei schwererem Blasgut dagegen ist es möglich, das Lüfterlaufrad als Drucklüfterlaufrad 8a auszugestalten, um zum Ausbringen des Blasgutes eine größere Luftfördermenge zur Verfügung stellen zu können. Solche, als Drucklüfterlaufrad 8a ausgebildeten Lüfterlaufräder sind den Flügel-Förderrädern 104 und 106 in den Fig. 4 bis 6 zugeordnet.

Ähnlich wie in Fig. 3 bildet die Förderrad-Rückwand 5 auch bei der in Fig. 4 und 5 dargestellten Ausführungsform die Rück- oder Seitenwand des Lüfterlaufrades, so daß eine leistungstarke und dennoch sehr kompakte Laufrad-Ausführung möglich ist.

Wie Fig. 4 zeigt, ist das Drucklüfterlaufrad 8a auch auf seiner dem Flügel-Förderrad 104 abgewandten Seite bis auf eine zentrale Einlaßöffnung 12 geschlossen ausgeführt.

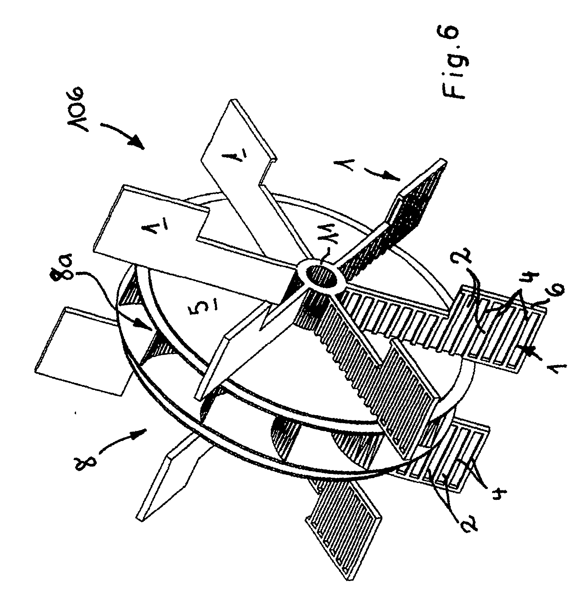

In Fig. 6 ist eine Ausführung dargestellt, die insbesondere bei dichtem, eventuell feuchtem und entsprechend schwerem Blasgut vorteilhaft einsetzbar ist. Die in Fig. 6 dargestellte Ausführung entspricht im wesentlichen dem in Fig. 3 gezeigten Doppel-Laufrad, jedoch ist zwischen dem äußeren Lüfterlaufrad 8 und dem Flügel-Förderrad 106 ein zusätzliches Drucklüfterlaufrad 8a vorgesehen. Da der Durchmesser eines Gebläse-Laufrades regelmäßig an das zu fördernde Blasgut anzupassen ist, ist der Durchmesser des Drucklüfterlaufrades 8a kleiner als der Durchmesser der benachbarten Lüfterlauf- und Flügel-Förderräder 8, 106. Wie aus Fig. 6 deutlich wird, stehen die Flügel 1 des Flügel-Förderrades 106 und die Flügel des äußeren Lüfterlaufrades 8 über den Außenumfang der Rück- oder Seitenwände vor. Durch das Drucklüfterlaufrad 8a wird ein starker Luftstrom erzeugt, der die freien Flügelenden insbesondere des Flügel-Förderrades 106 überströmt. Das dort über das Materialpolster strömende Blasgut wird von dem vom Drucklüfterlaufrad 8a kommenden Luftstrom angehoben und derart beschleunigt, daß auch schwere Blasgutteilchen und große Blasgutmengen vom Radialgebläse weit ausgetragen werden können. Durch die in Fig. 6 dargestellte besondere Gestaltung und Anordnung der Lüfterlaufräder 8, 8a sowie des Flügel-Förderrades 106 mit der an einer Stirnseite vorgesehenen und zum Drucklüfterlaufrad 8a führenden Einlaßöffnung 12 wird eine frühzeitige und optimale Vermischung des Blas- und Fördergutes erreicht. Dabei trägt die in Fig. 2 dargestellte rechteckige Form der am Spiralgehäuse 3 vorgesehenen Auslaßöffnung zu einer optimalen Streugutverteilung wesentlich bei.

Die an den Flügel-Förderrädern 101, 103, 104 und 106 vorgesehenen Haltevertiefungen 2 füllen sich in Abhängigkeit vom Blasgut-Material sowie von den Strömungsverhältnissen im Gebläseinneren bis auf eine gewisse Höhe auf. Durch das abrasive Blasgut-Material ist diese Ablagerung immer gleichmäßig und eine Unwucht des Flügel-Förderrades 101, 103, 104, 106 kann nicht auftreten. Eine Unwucht des Flügel-Förderrades wird auch dadurch vermieden, daß die, etwa in gleichen Abständen von der Rotationsachse angeordneten Haltevertiefungen 2 der einzelnen Flügel 1 etwa das gleiche Aufnahmevolumen haben. Die Messungen der Haltevertiefungen an der Gehäuseinnenseite des Spiralgehäuses 3 sowie an den Flügeln oder Schaufeln der Flügel-Förderrädern 101, 103, 104 und 106 richten sich nach der Beschaffenheit des Fördergutes. Diese Abmessungen sind so gewählt, daß sich auf den vom Blasgut beaufschlagten Teilen des Gebläses ein schützendes Materialpolster bildet, welches einen verschleißfreien Betrieb auch beim Fördern abrasiven Materials erlaubt. Die hier dargestellten Gebläse können beispielsweise in der Landwirtschaft zum Fördern von Sägemehl, Mulch oder Hackschnitzel oder zum Ausbringen von Kalk- und Düngemitteln eingesetzt werden. Dabei erlaubt die besondere Bauweise dieser Radialgebläse einen leistungsstarken Betrieb bei gleichzeitigem niedrigem Energiebedarf.

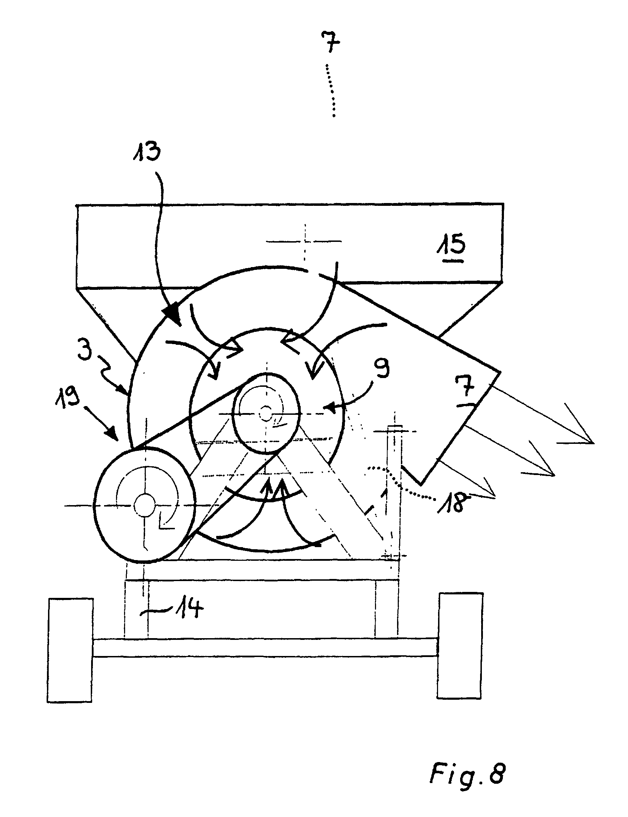

In den Fig. 7 und 8 ist ein Gebläse 13 dargestellt, daß in seinem Spiral- oder Gebläsegehäuse 3 ein Flügel-Förderrad 104 mit zusätzlichen Drucklüfterlaufrad 8a aufweist. Das Gebläse 13 ist auf einem fahrbaren Gebläse-Träger 14 angeordnet, der mit einem Traktor oder dergleichen Zugmaschine verbunden ist. Das Gebläse 13 kann aber ebenso als Fahrzeugaufbau ausgebildet und auf einer Ladebritsche eines Fahrzeuges angeordnet und/oder am Fahrzeug fest montierbar sein. Ebenso ist es möglich, den Gebläse-Träger so auszugestalten, daß dieser an der Drei-Punkt-Aufhängung der Zugmaschine lösbar befestigbar ist.

Wie aus den Fig. 7 und 8 deutlich wird, ist der Auslaßkanal 7 mit der Auslaßöffnung in Gebrauchsstellung quer zur Fahrtrichtung der Zugmaschine oder dergleichen Fahrzeuges ausgerichtet. Dem Gebläse 13 ist eine Verstelleinrichtung zugeordnet, die zwischen dem Gebläse-Träger 14 und dem Gebläsegehäuse 2 wirksam ist. Mittels der Verstelleinrichtung, dievorzugweiseeinenhydraulischenStellantrieb 18 hat, läßt sich die vertikale Auswurfrichtung des Radialgebläses 13 anpassen. Da dazu das gesamte Gebläsegehäuse 3 mit der Auslaßöffnung relativ zum Gebläseträger 14 um eine horizontal orientierte Drehachse verstellt wird, kann das Gebläse 13 beispielsweise an die Geländeformation angepaßt werden, ohne daß damit eine Änderung der spezifischen Daten des Gebläses verbunden wäre. Das Gebläse 13 zeichnet sich vielmehr in jeder Stellposition seines Gebläsegehäuses 2 praktisch unverändert durch eine hohe Leistungsfähigkeit aus. Trotz der auch in schwierigen Geländeformationen hohen Arbeitsleistung des Gebläses 13 kann dieses vergleichsweise kostengünstig und praktisch verschleißfrei betrieben werden.

In Fig. 7 ist zu erkennen, daß dem Luft- und Materialeinlaß 10 des Gebläses 13 ein Vorratsbehälter 15 für das auszubringende Blasgut vorgeschaltet ist. Zwischen dem Luft- und Materialeinlaß 10 und dem Vorratsbehälter 15 ist eine Zufuhreinrichtung vorgesehen, die hier als Förderband 16 ausgebildet ist und einen hydraulischen Förderantrieb hat.

Um die auf das Gelände auszubringende Menge des Düngers oder dergleichen Materials dosieren zu können, ist in der oberhalb des Förderbandes 16 angeordneten Abgabeöffnung des Vorratsbehälters 15 ein Schieber 17 oder dergleichen Dosiereinrichtung vorgesehen. Das Förderband 16 fördert das aus dem Vorratsbehälter 15 kommende Material unmittelbar vor den Luft- und Materialeinlaß 10 des Radialgebläses 13.

Das Flügel-Förderrad 104 und das ihm zugeordnete Drucklüfterlaufrad 8a sind auf einer gemeinsamen, etwa horizontal orientierten Rotorwelle 11 angeordnet. Dabei steht das entgegen der Fahrtrichtung vorstehende Ende der Rotorwelle 11 mit einem Riemengetriebe 19 oder dergleichen Untersetzungsgetriebe in Antriebsverbindung, dessen Getriebeeingang mit einem Antriebsmotor oder vorzugweise mit der Zapfwelle der Zugmaschine verbunden ist. In gleicher Weise können auch der Hydraulikzylinder 18 der Verstelleinrichtung und der Förderantrieb der Zufuhreinrichtung 16 über die Zapfwelle der Zugmaschine angetrieben werden.

## Patentansprüche

1. Gebläse zum Fördern stark schleißender Blasgüter, insbesondere zum pneumatischen Ausbringen von Halm- oder Schüttgütern, mit zumindest einem Flügel-Förderrad (101, 103, 104, 106), das in einem Gebläsegehäuse (3) rotiert, wobei das das Flügel-Förderrad (101, 103 104, 106) an den vorlaufenden Wänden seiner Flügel (1) und/oder das Gebläsegehäuse (3) wenigstens in einem vom Blasgut beaufschlagten Teilbereich seiner Gehäuseinnenwand Halteprofilierungen oder Haltevertiefungen (2) zur Bildung eines Blasgut-Materialpolsters aufweisen, **dadurch gekennzeichnet, daß** auf der einem Luft- und Materialeinlaß des Gebläses abgewandten Seite des Flügel-Förderrades (101, 103, 104, 106) eine Rück- oder Seitenwand (5) vorgesehen ist, und daß auf der den Flügeln (1) abgewandten Seite der Rück- oder Seitenwand (5) zumindest ein Lüfterlaufrad (8, 8a) vorgesehen ist, dem am Gebläsegehäuse (3) vorzugsweise ein eigener und insbesondere zentraler Lufteinlaß zugeordnet ist.

2. Gebläse nach Anspruch 1, **dadurch gekennzeichnet, daß** die Höhe und/oder die lichten Abmessungen der Halteprofilierungen oder Haltevertiefungen (2) an die Materialbeschaffenheit des Blasguts angepaßt sind.

3. Gebläse nach Anspruch 1 oder 2, **dadurch gekennzeichnet, daß** an den vorlaufenden Flügelwänden und/oder an der Gehäuseinnenwand etwa parallel zur Rotationsachse des Flügel-Förderrades (101, 103, 104, 106) orientierte Stege oder Rippen (4) vorgesehen sind, die zwischen sich die Haltevertiefungen (2) begrenzen.

4. Gebläse nach einem der Ansprüche 1 bis 3, **dadurch gekennzeichnet, daß** die etwa in gleichen Abständen von der Rotationsachse angeordneten Haltevertiefungen (2) der einzelnen Flügel (1) etwa das gleiche Aufnahmevolumen haben.

5. Gebläse nach einem der Ansprüche 3 bis 4, **dadurch gekennzeichnet, daß** die Stege oder Rippen (4) etwa in einem Abstand von 10 bis 100 mm angeordnet sind und eine Höhe von 10 bis 40 mm haben.

6. Gebläse nach einem der Ansprüche 1 bis 5, **dadurch gekennzeichnet, daß** die Haltevertiefungen (2) im Bereich 20 eines Auslaßkanals (7) des Gebläses gegenüber den am Innenumfang des Gebläsegehäuses (3) angeordneten Haltevertiefungen (2) kleinere lichte Abmessungen haben und daß gegebenenfalls die im Bereich des Auslaßkanals (7) vorgesehenen Stege oder Rippen (4) dazu in vergleichsweise kleineren Abständen voneinander angeordnet sind.

7. Gebläse nach einem der Ansprüche 1 bis 6, **dadurch gekennzeichnet, daß** der dem zumindest einen Lüfterlaufrad (8, 8a) zugeordnete Lufteinlaß zentral am Gebläsegehäuse (3) angeordnet ist.

8. Gebläse nach einem der Ansprüche 1 bis 7, **dadurch gekennzeichnet, daß** das Flügel-Förderrad (101, 103, 104, 106) und das zumindest eine Lüfterlaufrad (8, 8a) eine gemeinsame Welle (11) aufweisen und daß der dem Flügel-Förderrad (101, 103, 104, 106) zugeordnete Luft- und Materialeinlaß (10) einerseits und der Lufteinlaß (9) des zumindest einen Lüfterlaufrades (8, 8a) andererseits auf gegenüberliegenden Stirnseiten des Gebläsegehäuses (3) angeordnet sind.

9. Gebläse nach einem der Ansprüche 1 bis 8, **dadurch gekennzeichnet, daß** das Lüfterlaufrad als Drucklüfterlaufrad (8a) ausgebildet ist.

10. Gebläse nach einem der Ansprüche 1 bis 9, **dadurch gekennzeichnet, daß** das Flügel-Förderrad (103, 104, 106) und das benachbarte Lüfterlaufrad (8, 8a) eine gemeinsame Rück- oder Seitenwand (5) haben.

11. Gebläse nach einem der Ansprüche 1 bis 10, **dadurch gekennzeichnet, daß** die Flügel eines äußeren Lüfterlaufrades (8) den Flügeln (1) des Flügel-Förderrades (101, 103, 106) im wesentlichen entsprechen und daß zwischen dem äußeren Lüfterlaufrad (8) und dem Flügel-Förderrad (106) vorzugweise ein Drucklüfterlaufrad (8a) vorgesehen ist.

12. Gebläse nach einem der Ansprüche 1 bis 11, **dadurch gekennzeichnet, daß** die Flügel (1) des Flügel-Förderrades (106) und gegebenenfalls des äußeren Lüfterlaufrades (8) über den Außenumfang der Rück- oder Seitenwände (5) insbesondere des Drucklüfterlaufrades (8a) vorstehen.

13. Gebläse nach einem der Ansprüche 1 bis 12, **dadurch gekennzeichnet, daß** der Luft- und Material-Auslaß des Gebläsegehäuses (3) einen rechteckigen Öffnungsquerschnitt hat.

14. Gebläse nach dem Oberbegriff von Anspruch 1, insbesondere nach einem der Ansprüche 1 bis 13, **dadurch gekennzeichnet, daß** das Gebläsegehäuse (3) relativ zu einem Gebläse-Träger (14) um eine etwa horizontal orientierte Drehachse verdrehbar ist, und daß der Luft- und Materialauslaß des Gebläses in Gebrauchsstellung quer zur Fahrtrichtung einer dem Gebläse (13) zugeordneten Zugmaschine oder dergleichen Fahrzeuges ausgerichtet ist.

## Claims

1. Blower for conveying blown material which causes severe wear, particularly for pneumatically expelling stalks or loose materials, having at least one conveying impeller (101, 103, 104, 106) which rotates in a blower housing (3), wherein the conveying impeller (101, 103, 104, 106) has retaining profiles or retaining recesses (2) on the advancing faces of its blades (1) and/or the blower housing (3) has retaining profiles or retaining recesses (2) at least in a part of its inner housing wall subjected to the impact of the blown material, in order to form a cushion of blown material, **characterised in that** a rear or side wall (5) is provided on the side of the conveying impeller (101, 103, 104, 106) remote from an air and material inlet of the blower, and **in that** at least one ventilating impeller (8, 8a) is provided on the side of the rear or side wall (5) remote from the impeller blades (1), said impeller (8, 8a) preferably having its own, particularly central, air inlet on the blower housing (3).

2. Blower according to claim 1, **characterised in that** the height and/or the internal dimensions of the retaining profiles or retaining recesses (2) are matched to the nature of the blown material.

3. Blower according to claim 1 or 2, **characterised in that** strips or ribs (4) which define the retaining recesses (2) between them and which are oriented substantially parallel to the rotation axis of the conveying impeller (101, 103, 104, 106) are provided on the advancing faces of the blades and/or on the inner housing wall.

4. Blower according to one of claims 1 to 3, **characterised in that** the retaining recesses (2) of the individual impeller blades (1) arranged at substantially equal spacings from the rotation axis have approximately the same capacity.

5. Blower according to one of claims 1 to 4, **characterised in that** the strips or ribs (4) are arranged approximately at intervals of 10 to 100 mm and are 10 to 40 mm high.

6. Blower according to one of claims 1 to 5, **characterised in that** the retaining recesses (2) have smaller internal dimensions in the region 20 of an outlet channel (7) of the blower than the retaining recesses (2) arranged on the inner periphery of the blower housing (3) and **in that** the strips or ribs (4) provided in the region of the outlet channel (7) are optionally arranged at comparatively smaller intervals from one another.

7. Blower according to one of claims 1 to 6, **characterised in that** the air inlet associated with the or each ventilating impeller (8, 8a) is arranged centrally on the blower housing (3).

8. Blower according to one of claims 1 to 7, **characterised in that** the conveying impeller (101, 103, 104, 106) and the or each ventilating impeller (8, 8a) have a common shaft (11) and **in that** the air and material inlet (10) associated with the conveying impeller (101, 103, 104, 106) on the one hand and the air inlet (9) of the or each ventilating impeller (8, 8a) on the other hand are arranged on opposite end faces of the blower housing (3).

9. Blower according to one of claims 1 to 8, **characterised in that** the ventilating impeller is constructed as a pressurised ventilating impeller (8a).

10. Blower according to one of claims 1 to 9, **characterised in that** the conveying impeller (103, 104, 106) and the adjacent ventilating impeller (8, 8a) have a common rear or side wall (5).

11. Blower according to one of claims 1 to 10, **characterised in that** the blades of an outer ventilating impeller (8) substantially correspond to the blades (1) of the conveying impeller (101, 103, 106) and **in that** a pressurised ventilating impeller (8a) is preferably provided between the outer ventilating impeller (8) and the conveying impeller (106).

12. Blower according to one of claims 1 to 11, **characterised in that** the blades (1) of the conveying impeller (106) and optionally the outer ventilating impeller (8) project beyond the outer periphery of the rear or side walls (5) of the pressurised ventilating impeller (8a) in particular.

13. Blower according to one of claims 1 to 12, **characterised in that** the air and material outlet of the blower housing (3) has a rectangular cross section of opening.

14. Blower according to the pre-characterising clause of claim 1, particularly according to one of claims 1 to 13, **characterised in that** the blower housing (3) is rotatable relative to a blower carrier (14) about a substantially horizontally oriented rotation axis, and **in that**, in the position of use, the air and material outlet of the blower is directed at right angles to the direction of travel of a tractor or similar vehicle associated with the blower (13).

## Revendications

1. Soufflante pour épandre des matériaux fortement abrasifs apte à être épandus par débit d'air, en particulier pour épandre par débit d'air des matériaux en vrac ou à tiges, la soufflante comportant au moins une roue de propulsion à pales (101, 103, 104, 106) en rotation dans un carter de soufflante (3), la roue de propulsion à pales comportant au niveau des surfaces frontales de ses pales et/ou le carter de soufflante (3) comportant au moins sur les surfaces partielles de sa paroi interne qui sont en contact avec le matériau à épandre, des profilages de maintien ou des évidements de maintien (2) destinés à la formation d'un dépôt protecteur constitué par le matériau à épandre,
**caractérisée en ce que** du côté de la roue de propulsion à pales (101, 103, 104, 106) opposé à l'admission d'air et de matériau de la soufflante est prévue une paroi arrière ou latérale (5), et que du côté de la paroi arrière et latérale (5) opposé aux pales est prévu au moins un rotor de ventilateur (8, 8a), auquel est associé une propre admission d'air qui est en particulier centrée.

2. Soufflante selon la revendication 1, **caractérisée en ce que** la hauteur et/ou les dimensions intérieures des profilages de maintien ou évidements de maintien (2) sont adaptés à la consistance du matériau à épandre.

3. Soufflante selon l'une quelconque des revendications 1 ou 2, **caractérisée en ce que** des barrettes ou nervures (4) , orientées environ parallèlement à l'axe de rotation de la roue de propulsion à pales et délimitant entre elles les évidements de maintien (2) sont prévues sur les surfaces frontales avant des pales et/ou sur la paroi interne de la soufflante.

4. Soufflante selon l'une quelconque des revendications 1 à 3, **caractérisée en ce que** les évidements de maintien sur chacune des pales qui sont à peu près équidistants de l'axe de rotation, ont une capacité volumique à peu près égale.

5. Soufflante selon l'une quelconque des revendications 3 à 4, **caractérisée en ce que** les barrettes ou nervures (4) sont agencées à une distance respective d'environ 10 à 100 mm et comportent une hauteur d'environ 10 à 40 mm.

6. Soufflante selon l'une quelconque des revendications 1 à 5, **caractérisée en ce que** les évidements de maintien (2) au voisinage (20) d'un canal de refoulement (7) de la soufflante ont des dimensions intérieures réduites comparées aux dimensions intérieures des évidements de maintien (2) situés sur la circonférence intérieure du carter de soufflante (3) et que, le cas échéant, les barrettes ou nervures (4) qui sont disposées au voisinage du canal de refoulement (7) le soient avec des distances respectives réduites.

7. Soufflante selon l'une quelconque des revendications 1 à 6, **caractérisée en ce que** l'admission d'air associé au rotor de ventilateur (8, 8a) au nombre d'au moins un, est située de manière centrée sur le carter de soufflante (3).

8. Soufflante selon l'une quelconque des revendications 1 à 7, **caractérisée en ce que** la roue de propulsion à pales (101, 103, 104, 106) et le rotor de ventilateur (8, 8a) au nombre d'au moins un, ont un arbre (11) commun et que l'admission d'air et de matériau associée à la roue de propulsion à pales (101, 103, 104, 106) d'une part, et d'autre part l'admission d'air (9) du rotor de ventilateur (8, 8a) au nombre d'au moins un, sont situés sur deux faces opposées du carter de la soufflante (3).

9. Soufflante selon l'une quelconque des revendications 1 à 8, **caractérisée en ce que** le rotor de ventilateur est configuré en rotor de ventilateur à pression (8a).

10. Soufflante selon l'une quelconque des revendications 1 à 9, **caractérisée en ce que** la roue de propulsion à pales (101, 103, 104, 106) et le rotor de ventilateur (8, 8a) voisin ont une paroi arrière ou latérale (5) commune.

11. Soufflante selon l'une quelconque des revendications 1 à 10, **caractérisée en ce que** les pales d'un rotor de ventilateur externe (8) correspondent en principe aux pales (1) de la roue de propulsion à pales (101, 103, 104, 106) et que de préférence un rotor de ventilateur à pression est prévu entre le rotor de ventilateur externe (8) et la roue de propulsion à pales (106).

12. Soufflante selon l'une quelconque des revendications 1 à 11, **caractérisée en ce que** les pales (1) de la roue de propulsion à pales (106) et le cas échéant du rotor de ventilateur externe (8) sont saillants vis-à-vis de la circonférence externe des parois arrières ou latérales (5), en particulier du rotor de ventilateur à pression (8a).

13. Soufflante selon l'une quelconque des revendications 1 à 12, **caractérisée en ce que** l'orifice de refoulement d'air et de matériau du carter de soufflante (3) a une section rectangulaire.

14. Soufflante selon le préambule de la revendication 1, en particulier selon l'une quelconque des revendications 1 à 13, **caractérisée en ce que** le carter de la soufflante (3) est pivotable vis-à-vis du porteur (14) de la soufflante autour d'une axe à peu près horizontale, et que l'orifice de refoulement de l'air et du matériau est, en position d'utilisation, dirigé de manière perpendiculaire à la direction de déplacement d'une véhicule tracteur associé à la soufflante (13) ou d'un véhicule équivalent.
